(19) Europäisches Patentamt
European Patent Office
Office européen des brevets

(11) **EP 4 773 560 A1**

(12) **EUROPEAN PATENT APPLICATION**
published in accordance with Art. 153(4) EPC

(43) Date of publication:
**08.07.2026 Bulletin 2026/28**

(21) Application number: **24869876.3**

(22) Date of filing: **20.06.2024**

(51) International Patent Classification (IPC):
**H04L 27/26** *(2006.01)*    **H04L 27/34** *(2006.01)*

(52) Cooperative Patent Classification (CPC):
**H04L 27/26; H04L 27/34**

(86) International application number:
**PCT/CN2024/100414**

(87) International publication number:
**WO 2025/066315 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023  CN 202311287412**

(71) Applicant: **ZTE Corporation**
**Shenzhen, Guangdong  518057 (CN)**

(72) Inventors:
• **XIA, Shuqiang**
**Shenzhen, Guangdong 518057 (CN)**

• **WANG, Zhongbin**
**Shenzhen, Guangdong 518057 (CN)**
• **DUAN, Xiangyang**
**Shenzhen, Guangdong 518057 (CN)**
• **MA, Yihua**
**Shenzhen, Guangdong 518057 (CN)**
• **WANG, Yuxin**
**Shenzhen, Guangdong 518057 (CN)**
• **HU, Liujun**
**Shenzhen, Guangdong 518057 (CN)**
• **YU, Guanghui**
**Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **SIGNAL PROCESSING METHOD AND APPARATUS, AND STORAGE MEDIUM**

(57)    Provided are a signal processing method and apparatus, and a storage medium. The signal processing method comprises: acquiring a first frequency domain sequence, the first frequency domain sequence comprising a modulation symbol corresponding to a communication subcarrier and a modulation symbol corresponding to a reserved subcarrier, and obtaining a fifth frequency domain sequence by means of configuring the modulation symbol corresponding to the reserved subcarrier of the first frequency domain sequence, the peak-to-average ratio of the fifth frequency domain sequence being lower than the peak-to-average ratio of the first frequency domain sequence.

FIG. 2

**Description**

The present disclosure claims priority to Chinese Patent Application No. 202311287412.3, filed on September 28, 2023, which is incorporated herein by reference in its entirety.

TECHNICAL FIELD

The present disclosure relates to the field of wireless communication technologies, and in particular, relates to a signal processing method, a signal processing apparatus, and a storage medium.

BACKGROUND

Currently, the integrated sensing and communication system achieves both communication and sensing functions through the sharing of software and hardware resources. Traditional communication and sensing systems use their own waveforms, failing to achieve integration. The commonly used waveform in communication is an orthogonal frequency division multiplexing (OFDM) waveform.

SUMMARY

In an aspect, embodiments of the present disclosure provide a signal processing method. The signal processing method includes:

acquiring a first frequency-domain sequence, the first frequency-domain sequence comprising a modulation symbol corresponding to communication subcarriers and a modulation symbol corresponding to reserved subcarriers; and obtaining a fifth frequency-domain sequence by configuring the modulation symbol corresponding to the reserved subcarriers in the first frequency-domain sequence, a peak-to-average power ratio of the fifth frequency-domain sequence is less than a peak-to-average power ratio of the first frequency-domain sequence.

It should be noted that the peak-to-average power ratio mentioned in the present disclosure refers to a peak to average power ratio, which will be referred to as peak-to-average power ratio for ease of description.
In another aspect, embodiments of the present disclosure provide a signal processing apparatus. The signal processing apparatus includes:

an acquisition module configured to acquire a first frequency-domain sequence, the first frequency-domain sequence including a modulation symbol corresponding to communication subcarriers and a modulation symbol corresponding to reserved subcarriers; and a processing module configured to obtain a fifth frequency-domain sequence by configuring the modulation symbol corresponding to the reserved subcarriers in the first frequency-domain sequence, a peak-to-average power ratio of the fifth frequency-domain sequence being less than a peak-to-average power ratio of the first frequency-domain sequence.

In yet another aspect, embodiments of the present disclosure provide a communication apparatus. The communication apparatus includes a memory and a processor. The memory is coupled to the processor. The memory is configured to store a computer program; and the processor, when executing the computer program, implements the signal processing method described in any one of the above embodiments.
In yet another aspect, embodiments of the present disclosure provide a computer readable storage medium, the computer-readable storage medium stores computer program instructions; the computer program instructions, when executed by a processor, cause the processor to implement the signal processing method described in any one of the above embodiments.
In yet another aspect, embodiments of the present disclosure provide a computer program product. The computer program product includes computer program instructions; and the computer program instructions, when run on a processor, cause the processor to implement the signal processing method as described in any one of the above embodiments.

BRIEF DESCRIPTION OF THE DRAWINGS

In order to describe technical solutions in the present disclosure more clearly, the accompanying drawings to be used in some embodiments of the present disclosure will be introduced briefly. Obviously, the accompanying drawings to be described below are merely drawings of some embodiments of the present disclosure, and a person of ordinary skill in the art can obtain other drawings according to those drawings.

FIG. 1 is a schematic diagram of an architecture of an integrated sensing and communication system, in accordance with some embodiments.

FIG. 2 is a flow diagram of a signal processing method, in accordance with some embodiments.

FIG. 3 is a simulation schematic diagram of a peak-to-average power ratio, in accordance with some embodiments.

FIG. 4 is a flow chart of another signal processing method, in accordance with some embodiments.

FIG. 5 is a flow chart of yet another signal processing method, in accordance with some embodiments.

FIG. 6 is a flow chart of yet another signal processing method, in accordance with some embodiments.

FIG. 7 is a simulation schematic diagram of another peak-to-average power ratio, in accordance with some embodiments.

FIG. 8 is a structural schematic diagram of a signal processing apparatus, in accordance with some embodiments.

FIG. 9 is a structural schematic diagram of a communication apparatus, in accordance with some embodiments.

DETAILED DESCRIPTION

The technical solutions in the present disclosure will be described below clearly and completely in conjunction with the accompanying drawings in the present disclosure. Obviously, the described embodiments are merely a part of the embodiments of the present disclosure, but not all of the embodiments of the present disclosure. Based on the embodiments of the present disclosure, all other embodiments obtained by those ordinary skilled in the art without making inventive efforts fall within the scope of protection of the present disclosure.

It should be noted that in the present disclosure, the expressions such as "exemplary/exemplarily" or "for example" are used to present an example, illustration, or explanation. Any embodiment or design solution described as "exemplary/exemplarily" or "for example" in the present disclosure should not be illustrated as being more preferred or advantageous over other embodiments or design solutions. Rather, the usage of the expressions, such as "exemplary/exemplarily" or "for example", is intended to present relevant concepts in a detailed manner.

Hereinafter, terms of "first" and "second" are used for descriptive purposes only, and are not to be understood as indicating or implying the relative importance or implicitly indicating a number of indicated technical features. Thus, a feature defined with a term "first" or "second" may explicitly or implicitly include one or more of the feature(s).

In the description of the present disclosure, unless otherwise specified, the symbol "/" means "or"; for example, A/B may represent A or B. Herein, "and/or" is only used to describe an associated relationship between associated objects, representing that there may be three relationships; for example, A and/or B may represent three cases: only A, only B, and both A and B. Additionally, "at least one" means one or more, and "multiple/plurality of" means two or more.

In an integrated sensing and communication system, two service functions of data transmission and target sensing may be achieved using the same resources such as time, frequency, and power. Compared to traditional systems where communication and sensing are separated, the integrated sensing and communication system has many advantages, such as cost savings, reduced device size, low power consumption, and improved spectrum efficiency. Therefore, the technology of integrated sensing and communication is receiving increasing attention from the industry.

In terms of signal characteristics, OFDM waveforms have significant advantages in spectral efficiency, interference suppression, and compatibility with multiple-input multiple-output (MIMO) technology. Therefore, OFDM waveforms have been widely used in 4G and 5G communication systems. Furthermore, since the ambiguity function of the OFDM signal exhibits a single peak shape and has good distance resolution characteristics, OFDM signals may perform wireless sensing tasks very well. Based on the two reasons mentioned above, OFDM is often used as the main modulation method in the design of integrated sensing and communication waveforms.

The OFDM waveform is an excellent communication waveform, and communication and sensing waveforms differ in design. Therefore, in the case of designing the integrated sensing and communication waveforms by using some technologies, the OFDM waveform serves as a communication waveform, and the sensing waveform is transmitted in a time-division/frequency-division manner. However, this approach has the problem of insufficient utilization of sensing resources and inability to truly achieve the integrated sensing and communication.

As described in the background, if the OFDM waveform of communication is directly used to realize the integration of sensing and communication, there will be a problem of high peak to average power ratio (which is also referred to as peak-to-average power ratio, PAPR). A high PAPR usually limits the sensing distance, resulting in reduction of the coverage of OFDM signal.

For the aforementioned technical problems, embodiments of the present disclosure provide a signal processing method, the idea of which is to reduce the PAPR of the OFDM signal by configuring a modulation symbol of a reserved subcarrier sequence in a first frequency domain sequence, so as to avoid the limitation on the sensing coverage of the OFDM signal in the case where the OFDM signal is used as an integrated sensing and communication signal.

The integrated sensing and communication system provided in the embodiments of the present disclosure will be described in details below with reference to the accompanying drawings.

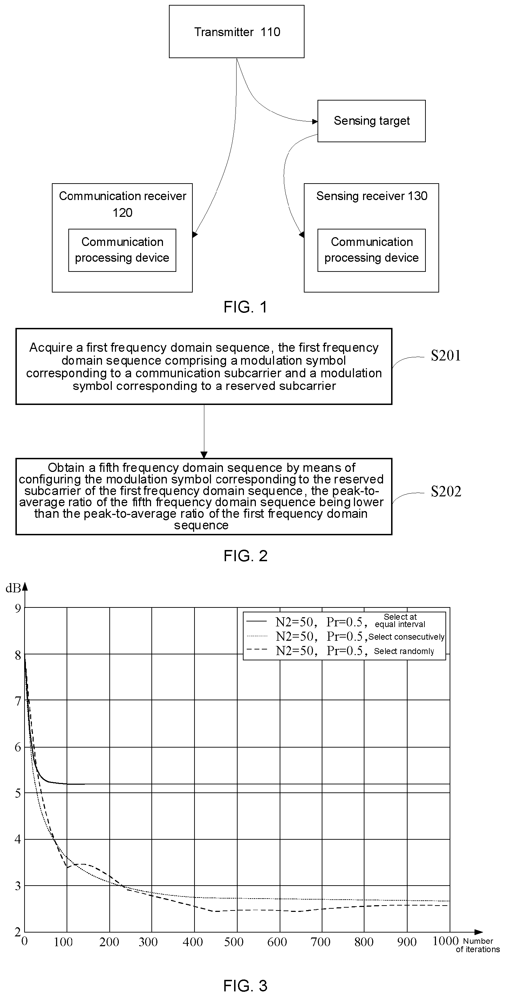

FIG. 1 is a schematic diagram of an architecture of an integrated sensing and communication system provided in the embodiments of the present disclosure. As shown in FIG. 1, the integrated sensing and communication system 100 includes: a transmitter 110, a communication receiver 120, and a sensing receiver 130.

The transmitter 110 is configured to transmit an integrated sensing and communication signal.

In some embodiments, the transmitter 110 is configured to first perform peak-to-average power ratio suppression processing on the integrated sensing and communication signal, and then transmit the integrated sensing and communication signal.

It should be noted that the peak-to-average power ratio mentioned in the present disclosure refers to a peak to average power ratio, which will be referred to as peak-to-average power ratio for ease of description.

For example, the transmitter 110 may transmit the integrated sensing and communication signal via a wireless air interface.

For example, the transmitter 110 may be a base station or a terminal device, etc. For example, the terminal device may be a mobile phone, a tablet computer, a desktop, a laptop, a handheld computer, a notebook computer, an ultra-mobile personal computer (UMPC), a netbook, a cellular phone, a personal digital assistant (PDA), an augmented reality (AR) device, or a virtual reality (VR) device. The form of the terminal device is not limited in the embodiments of the present disclosure.

The communication receiver 120 is configured to receive the integrated sensing and communication signal and obtain communication information based on the integrated sensing and communication signal.

In some embodiments, the communication receiver 120 includes a communication processing device for performing communication processing on the received integrated sensing and communication signal to obtain the communication information.

In some embodiments, the communication receiver 120 includes a receiving antenna, and the communication receiver 120 may receive the integrated sensing and communication signal through the receiving antenna.

For example, the communication receiver 120 can receive the integrated sensing and communication signal via the wireless air interface.

For example, the communication receiver 120 may be a base station or a terminal device, etc.

The sensing receiver 130 is configured to receive the integrated sensing and communication signal after being scattered by a sensing target, and obtain sensing information based on the integrated sensing and communication signal.

In some embodiments, the sensing receiver 130 includes a sensing processing device for performing sensing processing on the received integrated sensing and communication signal to obtain the sensing information.

For example, the sensing receiver 130 may receive the integrated sensing and communication signal via a wireless air interface.

For example, the sensing receiver 130 may be a base station or a terminal device, etc.

It should be noted that the communication receiver 120 and the sensing receiver 130 in the embodiments of the present disclosure may be integrated on a same device, or the communication receiver 120 and the sensing receiver 130 may be deployed on different devices, respectively.

It should be noted that the system architecture and application scenarios described in the embodiments of the present disclosure are for the purpose of more clearly illustrating the technical solutions of the embodiments of the present disclosure, and do not constitute a limitation on the technical solutions provided in the embodiments of the present disclosure. As those skilled in the art will know, with the evolution of system architecture and the emergence of new business scenarios, the technical solutions provided in the embodiments of the present disclosure are also applicable to similar technical problems.

The signal processing method provided in the embodiments of the present disclosure will be described in detail below.

The present disclosure provide a signal processing method, and the method may be applied to the transmitter 110 shown in FIG. 1. As shown in FIG. 2, the method includes the following steps.

In S201, a first frequency-domain sequence is acquired, the first frequency-domain sequence includes a modulation symbol corresponding to communication subcarriers and a modulation symbol corresponding to reserved subcarriers.

For example, the first frequency-domain sequence mentioned above may be a frequency-domain sequence corresponding to the OFDM signal.

The OFDM symbol may include multiple subcarriers for modulating the data to be transmitted, so as to achieve the simultaneous transmission of multiple data streams over a wideband spectrum. The communication subcarriers are subcarriers used to transmit data. The reserved subcarriers are a part of subcarriers that are reserved in advance. The reserved subcarriers are not used for data transmission, but may be used to insert specific pilot signals, repetitive data, or guard intervals to improve the system performance. In the embodiments of the present disclosure, the PAPR is reduced by configuring the modulation symbol of the reserved subcarriers.

In some embodiments, the number and location of reserved subcarriers may be set according to the user's requirements for the OFDM signal. For example, the number of reserved subcarriers may be determined based on the data amount of the data to be transmitted and the transmission quality requirements. In the case where the data amount is small, the number of reserved subcarriers may be increased appropriately to ensure the data transmission quality; in the case where the data amount is large, the number of reserved subcarriers may be reduced appropriately to improve the transmission efficiency. The reserved subcarriers are usually located at two ends or a center of the frequency band to minimize the impact of the reserved subcarriers on the transmitted data, thereby ensuring the transmission quality. In addition, the number and location of reserved subcarriers may be set according to the user's requirements for the PAPR of the OFDM signal, so as to enable the OFDM signal to have a low PAPR.

For example, it is assumed that the first frequency-domain sequence includes N subcarriers, the number of communication subcarriers is N1, the number of reserved subcarriers is N2, and N1 + N2 = N. It is assumed that a matrix representing a communication subcarrier index is A, then a size of matrix A is N1*N. In each row of the matrix A, there may be only one element of 1 (the corresponding column number is an index of a subcarrier), and all other elements are 0. It is assumed that a matrix representing a reserved subcarrier index is B, then a size of matrix B is N2*N. In each row of the matrix B, there may be only one element of 1 (the corresponding column number is an index of a subcarrier), and all other elements are 0.

In some embodiments, the method further includes: determining the reserved subcarriers from subcarriers in the first frequency-domain sequence.

As an implementation, the reserved subcarriers are selected at equal intervals from the subcarriers in the first frequency-domain sequence. For example, a certain number of reserved subcarriers may be selected at equal intervals at the center of the subcarriers in the first frequency-domain sequence. It is understandable that the manner of selecting at equal intervals may make the distribution of the reserved subcarriers in the frequency band more uniform, but may result in an insufficient or excessive number of the reserved subcarriers, affecting transmission efficiency.

As another implementation, the reserved subcarriers are selected consecutively from the subcarriers in the first frequency-domain sequence. For example, a certain number of subcarriers may be consecutively selected as reserved subcarriers from a certain range of subcarriers in the first frequency-domain sequence. It is understandable that using the manner of selecting consecutively may select the number and location of reserved subcarriers according to actual needs, but may lead to uneven distribution of the reserved subcarriers in the frequency band, affecting transmission quality.

As still another implementation, the reserved subcarriers are selected randomly from the subcarriers in the first frequency-domain sequence. It is understandable that the manner of selecting randomly is simple and easy to implement, but may lead to uneven distribution of the reserved subcarriers in the frequency band, affecting transmission quality.

In addition, different selection manners have different effects on PAPR. For example, as shown in FIG. 3, as the number of iterations increases, the reduction of the PAPR corresponding to different selection manners varies. As can be seen from FIG. 3, after more than 300 iterations (or after the first frequency-domain sequence tends to converge), the manner of randomly selecting reserved subcarriers has the most significant effect on reducing the PAPR, followed by the manner of continuously selecting reserved subcarriers, and the manner of selecting reserved subcarriers at equal intervals has a poor effect on reducing the PAPR.

In S202, a fifth frequency-domain sequence is obtained by configuring the modulation symbol corresponding to the reserved subcarriers in the first frequency-domain sequence, a peak-to-average power ratio of a fifth frequency-domain sequence is less than the peak-to-average power ratio of the first frequency-domain sequence.

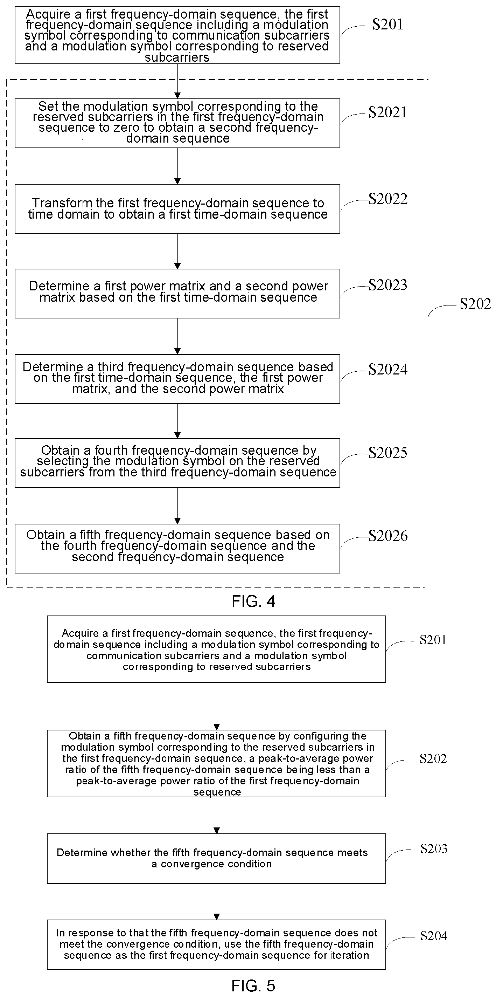

In some embodiments, as shown in FIG. 4, S202 may be implemented as following steps.

In S2021, the modulation symbol corresponding to the reserved subcarriers in the first frequency-domain sequence is set to zero to obtain a second frequency-domain sequence.

It should be noted that in the embodiments of the present disclosure, the modulation symbol on the communication subcarriers in the first frequency-domain sequence are known and remain unchanged, and only the modulation symbol on the reserved subcarriers are configured.

For example, it is assumed that the first frequency-domain sequence is X(k), where k=1, 2, ..., N, then the modulation symbol corresponding to the reserved subcarriers in the first frequency-domain sequence is set to zero, and the obtained second frequency-domain sequence is XC.

In some embodiments, before S2021, the method further includes: initializing the first frequency-domain sequence. For example, initializing the first frequency-domain sequence includes: determining an initialization value for the first frequency-domain sequence and allocating power to the modulation symbols of the communication subcarriers and reserved subcarriers in the first frequency-domain sequence. For example, it is assumed that the total power is 1, the power allocated to the modulation symbol of the communication subcarriers is a, and the power allocated to the modulation symbols of the reserved subcarriers is b; $b = \sqrt{1-a^2}$, $a = \|XC\|_2$.

In S2022, the first frequency-domain sequence is transformed to time domain to obtain a first time-domain sequence.

In some embodiments, an inverse Fourier transform matrix may be used to transform the first frequency-domain sequence to the time domain to obtain the first time-domain sequence. For example, the first time-domain sequence may satisfy the following formula (1).

$$x\left(n\right)=F^{H}X\left(k\right) \qquad \text{Formula (1)}$$

In the above formula, $x(n)$ represents the first time-domain sequence, where n=1, 2, ..., N; $F^H$ represents the inverse Fourier transform matrix.

In some embodiments, the relationship between the first time-domain sequence and the first frequency-domain sequence satisfies the following Formula (2).

$$\sum_{n=1}^{N}\left|x\left(n\right)\right|^{2} = \sum_{k=1}^{N}\left|X\left(k\right)\right|^{2} = 1 \qquad \text{Formula (2)}$$

In S2023, based on the first time-domain sequence, a first power matrix and a second power matrix are determined.

The first power matrix is a diagonal matrix, and an element value on a diagonal of the first power matrix is a sum of a maximum value of power values of all time-domain symbols in the first time-domain sequence and a first preset offset.

The first preset offset is a constant greater than zero. For example, the value of the first preset offset may be 1 or 2.

The second power matrix is a diagonal matrix, and element values on a diagonal of the second power matrix are the power values of all the time-domain symbols in the first time-domain sequence.

In some embodiments, S2023 described above may be implemented as the following steps.

In a1, the power value of each time-domain symbol in the first time-domain sequence is determined.

For example, the power value of each time-domain symbol in the first time-domain sequence is the square of the modulus of each time-domain symbol. For example, the power value of each time-domain symbol in the first time-domain sequence may be determined according to the following Formula (3).

$$p= \left|x\left(\mathrm{n}\right)\right|^{2} \qquad \text{Formula (3)}$$

In the above formula, p represents a power value of a time-domain symbol.

In some embodiments, in the case where the first time-domain sequence includes a first time-domain symbol and a second time-domain symbol, determining a power sequence corresponding to the first time-domain sequence includes: determining the power corresponding to the first time-domain symbol based on a square of a modulus of the first time-domain symbol; and determining the power corresponding to the second time-domain symbol based on square of a modulus of the second time-domain symbol and a second preset offset; the second preset offset being a constant greater than zero.

The first time-domain symbol is a usable time-domain symbol; the second time-domain symbol is an unusable time-domain symbol or a time-domain symbol (e.g., a pilot symbol) with a specific purpose. The power value of the second time-domain symbol is usually 0 or a small value.

For example, the power value of each time-domain symbol in the first time-domain sequence may be determined according to the following Formula (4).

$$p = \begin{cases} \left|x(\mathrm{n})\right|^{2}, n \in C \\ \left|x(\mathrm{n})\right|^{2} + \mathit{offset}2, n \in D \end{cases} \qquad \text{Formula (4)}$$

In the above formula, $C$ represents an index set of the first time-domain symbol, $D$ represents an index set of the second time-domain symbol, and *offset2* represents the second preset offset.

It is understandable that, since the power value of the second time-domain symbol is usually 0 or a small value, the second preset offset may be added to the power value of the second time-domain symbol to avoid a singular value occurring during the subsequent calculations.

In a2, based on an identity matrix and the sum of the maximum value of the power values of all the time-domain symbols in the first time-domain sequence and the first preset offset, the first power matrix is obtained.

For example, the above a2 may be implemented as follows.

In a2.1, a target power value is obtained based on the sum of the maximum value of the power values of all the time-domain symbols in the first time-domain sequence and the first preset offset.

For example, the target power value may satisfy the following Formula 5.

$$\mathrm{p}_{\max} = \max\left(\mathrm{p}\right) + \mathit{offset}1 \qquad\qquad \text{Formula (5)}$$

In the above formula, $\mathrm{p}_{\max}$ represents the target power value, max is a maximum value operator, and *offset1* represents the first preset offset.

In a2.2, the first power matrix is obtained based on the target power value and the identity matrix.

For example, the first power matrix may satisfy the following Formula 6.

$$M = p_{\max} I_N \qquad\qquad \text{Formula (6)}$$

In the above formula, $M$ represents the first power matrix, $I_N$ represents the identity matrix, and $I_N$ is an N*N identity matrix.

In a3, the power value of each time-domain symbol in the first time-domain sequence is diagonalized to obtain the second power matrix.

For example, the second power matrix satisfies the following Formula 7.

$$L = diag\left(p\right) \qquad\qquad \text{Formula (7)}$$

In the above formula, $L$ represents the second power matrix, and *diag*() is a function used to construct the diagonal matrix.

In S2024, a third frequency-domain sequence is determined based on the first time-domain sequence, the first power matrix, and the second power matrix.

In some embodiments, S2024 above may be implemented as follows: calculating a difference between the first power matrix and the second power matrix, and transforming a product of the difference and the first time-domain sequence to frequency-domain to obtain the third frequency-domain sequence.

For example, a Fourier transform matrix may be used to transform the product of the difference and the first time-domain sequence to the frequency-domain.

For example, the third frequency-domain sequence may satisfy the following Formula (8).

$$Y = F\left(M - L\right)x\left(n\right) \qquad\qquad \text{Formula (8)}$$

In the above formula, $Y$ represents the third frequency-domain sequence, and $F$ represents the Fourier transform matrix (or a normalized Fourier transform matrix).

In S2025, a fourth frequency-domain sequence is obtained by selecting the modulation symbol on the reserved subcarriers from the third frequency-domain sequence.

For example, the fourth frequency-domain sequence may satisfy the following Formula (9).

$$Y_b = B^T B Y \qquad\qquad \text{Formula (9)}$$

In the above formula, $Y_b$ represents the fourth frequency-domain sequence, and $B$ is an index matrix of the reserved subcarriers in the first frequency-domain sequence.

In S2026, a fifth frequency-domain sequence is obtained based on the fourth frequency-domain sequence and the second frequency-domain sequence.

In some embodiments, the above S2026 may be implemented as the following steps.

In b1, a normalized sequence of the fourth frequency-domain sequence is determined.

In some embodiments, the fourth frequency-domain sequence is normalized, and a result of the normalization is multiplied by a first power value to obtain the normalized sequence of the fourth frequency-domain sequence.

In the above formula, the first power value is a power value b allocated to the reserved subcarriers in the first frequency-domain sequence during the initialization process. The power value b may be determined based on the square of the modulus of the modulation symbol corresponding to the reserved subcarriers in the first frequency-domain sequence.

For example, the normalized sequence of the fourth frequency-domain sequence may satisfy the following Formula (10).

$$Z = \frac{b\,Y_b}{\|Y_b\|} \qquad\qquad \text{Formula (10)}$$

In the above formula, $Z$ represents the normalized sequence of the fourth frequency-domain sequence, and $b$ represents the first power value.

In b2, the fifth frequency-domain sequence is obtained based on the normalized sequence of the fourth frequency-domain sequence and the second frequency-domain sequence.

In some embodiments, a value of an element at a position in the normalized sequence of the fourth frequency-domain sequence and a value of an element at corresponding position in the second frequency-domain sequence are added together to obtain the fifth frequency-domain sequence.

For example, the fifth frequency-domain sequence may satisfy the following Formula (11).

$$X = Z + XC \qquad\qquad \text{Formula (11)}$$

In the above formula, $X$ represents the fifth frequency-domain sequence.

It is understandable that, based on the above S2021 to S2026, it can be seen that the embodiments of the present disclosure achieve the purpose of reducing the PAPR of the OFDM signal by configuring the modulation symbol of the reserved subcarrier sequence in the first frequency-domain sequence. In this way, it is possible to avoid the limitation on the sensing coverage in the case where the OFDM signal is used as the integrated sensing and communication signal.

In some embodiments, in order to further improve the PAPR suppression effect, as shown in FIG. 5, the embodiments of the present disclosure may further include S203 to S204.

In S203, whether the fifth frequency-domain sequence meets a convergence condition is determined.

The convergence condition includes at least one of the following:

an actual number of iterations being greater than or equal to a preset maximum number of iterations; or
a modulus of a difference between a fifth frequency-domain sequence obtained in a (k+1)-th iteration and a fifth frequency-domain sequence obtained in a k-th iteration being less than a preset threshold.

It is understood that, the actual number of iterations is less than the preset maximum number of iterations, which means that the PAPR still has room for reduction, so that the iteration may be continued; the modulus of the difference between the fifth frequency-domain sequences obtained in two adjacent iterations is less than the preset threshold, which means that there is little room for PAPR to be reduced, so that the iteration may be terminated.

In S204, in response to that the fifth frequency-domain sequence does not meet the convergence condition, the fifth frequency-domain sequence is used as the first frequency-domain sequence for iteration.

For example, in the case where the fifth frequency-domain sequence does not meet the convergence condition, the fifth frequency-domain sequence may be used as the first frequency-domain sequence, and the above S2021 to S2026 may be executed iteratively.

It is understood that, based on the method provided in the embodiments of the present disclosure, the difference between the power values of all the time-domain symbols in the first time-domain sequence may be reduced by means of iteration, making the first time-domain sequence tend toward a constant modulus, thereby improving the PAPR suppression effect of the OFDM signal.

For the sake of clarity, the signal processing method provided in the embodiments of the present disclosure is described below in conjunction with examples.

For example, the description is made by taking an example in which the first frequency-domain sequence is a frequency-domain sequence corresponding to the OFDM symbol. It is assumed that the first frequency-domain sequence includes a modulation symbol of communication subcarriers and a modulation symbol of reserved subcarriers, and the modulation symbol on the communication subcarriers is known and remain unchanged.

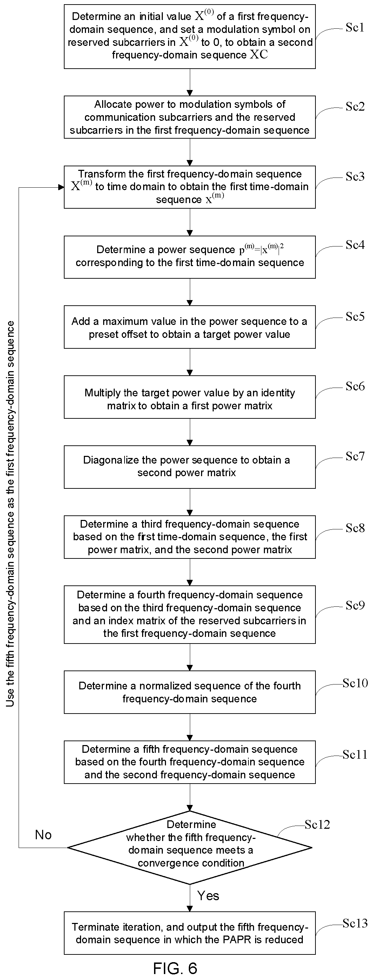

As shown in FIG. 6, the signal processing method provided in the embodiments of the present disclosure may be implemented as the following steps.

In Sc1, an initial value $X^{(0)}$ of the first frequency-domain sequence is determined, and the modulation symbol on the reserved subcarriers in $X^{(0)}$ is set to 0, so as to obtain the second frequency-domain sequence XC.

In Sc2, power is allocated to the modulation symbols of the communication subcarriers and reserved subcarriers in the first frequency-domain sequence.

For example, it is assumed that the total power is 1, the power allocated to the modulation symbol of the communication subcarriers is a, and the power allocated to the modulation symbols of the reserved subcarriers is b;

$$b = \sqrt{1-a^2}$$ $a = \|XC\|_2$.

In Sc3, the first frequency-domain sequence $X^{(m)}$ is transformed to the time domain to obtain the first time-domain sequence $x^{(m)}$.

The first time-domain sequence satisfies: $x^{(m)} = F^H X^{(m)}$. In the above formula, m represents the number of iterations, and m is an integer greater than 0.

In Sc4, the power sequence $p^{(m)} = |x^{(m)}|^2$ corresponding to the first time-domain sequence is determined.

It can be seen that the power sequence is composed of the power values corresponding to all the time domain symbols in the first time-domain sequence.

In Sc5, a maximum value in the power sequence is added to a preset offset to obtain a target power value.

The target power value satisfies: $p_{max}^{(m)} = \max\left(p^{(m)}\right) + \mathit{offset}1$ .

In Sc6, the target power value is multiplied by an identity matrix to obtain a first power matrix.

The first power matrix satisfies: $M^{(m)} = p_{max}^m I_N$ .

In Sc7, the power sequence is diagonalized to obtain a second power matrix.

The second power matrix satisfies: $L^{(m)} = diag(p^m)$.

In Sc8, a third frequency-domain sequence is determined based on the first time-domain sequence, the first power matrix, and the second power matrix.

The third frequency-domain sequence satisfies: $Y^{(m)} = F(M^{(m)} - L^{(m)})x^{(m)}$.

In Sc9, a fourth frequency-domain sequence is determined based on the third frequency-domain sequence and an index matrix of the reserved subcarriers in the first frequency-domain sequence; the fourth frequency-domain sequence including the modulation symbol on the reserved subcarriers selected from the third frequency-domain sequence.

The fourth frequency-domain sequence satisfies: $Y_b^{(m)} = B^T B Y^{(m)}$ .

In Sc10, a normalized sequence of the fourth frequency-domain sequence is determined.

The normalized sequence of the fourth frequency-domain sequence satisfies:

$$Z^{(m)} = \frac{b Y_b^{(m)}}{\left\| Y_b^{(m)} \right\|} .$$

In Sc11, a fifth frequency-domain sequence is determined based on the fourth frequency-domain sequence and the second frequency-domain sequence.

The fifth frequency-domain sequence satisfies: $X^{(m+1)} = Z^{(m)} + XC$.

In Sc12, whether the fifth frequency-domain sequence meets a convergence condition is determined.

For example, in the case where the fifth frequency-domain sequence does not meet the convergence condition, the fifth frequency-domain sequence is used as the first frequency-domain sequence, and then Sc3 is executed. In the case where the fifth frequency-domain sequence meets the convergence condition, Sc13 is executed.

In Sc13, the iteration is terminated, and the fifth frequency-domain sequence in which the PAPR is reduced is output.

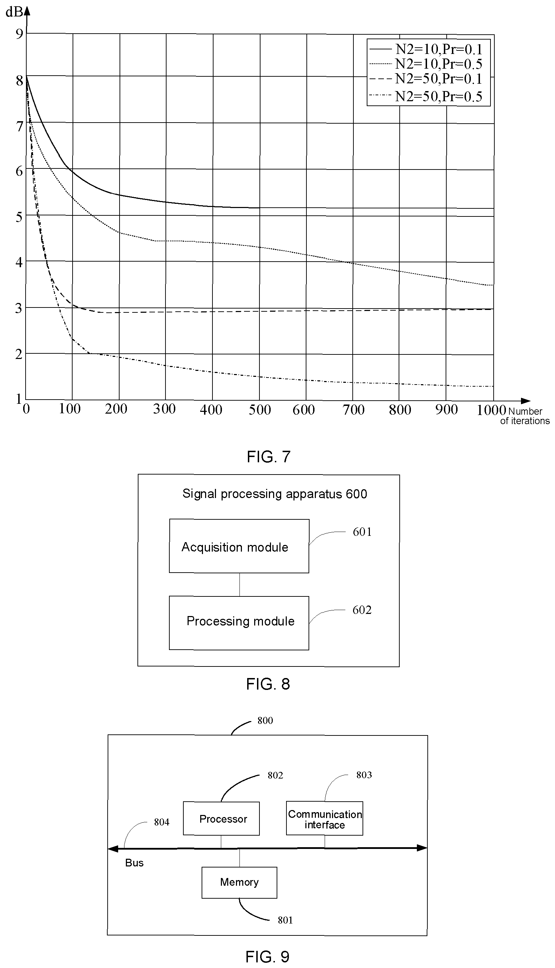

For example, it is assumed that the total number N of subcarriers in the first frequency-domain sequence is expressed as: N=100, the number of reserved subcarriers is denoted as N2; the total power is 1, and the power Pr of the reserved subcarriers is expressed as: Pr=b; it is assumed that the modulation method of the communication subcarriers is quadrature phase shift keying (QPSK), and the selection manner of the reserved subcarriers is random selection; and the preset maximum number of iterations is 1000. Based on the above assumptions, simulations are performed with different values of the number N2 of reserved subcarriers and different values of the power Pr of the reserved subcarriers, and the simulation results are shown in FIG. 7. As can be seen from FIG. 7, in the case where the number N2 of reserved subcarriers take different values and the power Pr of reserved subcarriers take different values, the PAPR suppression effect varies.

In actual sequence design, some time-domain symbols may be unusable or configured for specific purposes. Therefore, in the case of performing PAPR suppression, the processing manner for the time-domain symbols for different purposes may differ. For example, it is assumed that an index set C of time-domain symbols includes a usable time-domain symbol; an index set D of time-domain symbols includes a unusable time-domain symbol or a time-domain symbol (e.g., a pilot symbol) with a specific usage, and the power of the time-domain symbol in the index set D is typically 0 or a small number.

For the above-described actual sequence design, the signal processing method provided in the embodiments of the present disclosure may be implemented as follows:

In Sd1, an initial value $X^{(0)}$ of the first frequency-domain sequence is determined, and the modulation symbol on the reserved subcarriers in $X^{(0)}$ is set to 0, so as to obtain the second frequency-domain sequence XC.

In Sd2, power is allocated to the modulation symbols of the communication subcarriers and reserved subcarriers in the first frequency-domain sequence.

For example, it is assumed that the total power is 1, the power allocated to the modulation symbol of the communication subcarriers is a, and the power allocated to the modulation symbols of the reserved subcarriers is b;

$$b = \sqrt{1 - a^2}$$ , $a = \|XC\|_2$.

In Sd3, the first frequency-domain sequence $X^{(m)}$ is transformed to the time domain to obtain the first time-domain sequence $x^{(m)}$.

The first time-domain sequence satisfies: $x^{(m)} = F^H X^{(m)}$. In the above formula, m represents the number of iterations, and m is an integer greater than 0.

In Sd4, the index set D of time-domain symbols that are unsable or have a specific purpose in the first time-domain sequence is determined.

In Sd5, a power sequence corresponding to the first time-domain sequence is determined.

The power sequence corresponding to the first time-domain sequence satisfies:

$$\mathrm{p}^{(m)}(n) = \begin{cases} \left| x^{(m)}(\mathrm{n}) \right|^2, n \in C \\ \left| x^{(m)}(\mathrm{n}) \right|^2 + offset2, n \in D \end{cases}.$$

It can be seen that the power sequence is composed of the power values corresponding to all the time-domain symbols (including time-domain symbols belonging to set C and time-domain symbols belonging to set D) in the first time-domain sequence.

In Sd6, a maximum value in the power sequence is added to a preset offset to obtain a target power value.

The target power value satisfies: $\mathrm{p}^{(m)}_{\max} = \max\left(\mathrm{p}^{(m)}\right) + offset1$ .

In Sd7, the target power value is multiplied by an identity matrix to obtain a first power matrix.

The first power matrix satisfies: $M^{(m)} = p^m_{\max} I_N$ .

In Sd8, the power sequence is diagonalized to obtain a second power matrix.

The second power matrix satisfies: $L^{(m)} = diag(p^m)$.

In Sd9, a third frequency-domain sequence is determined based on the first time-domain sequence, the first power matrix, and the second power matrix.

The third frequency-domain sequence satisfies: $Y^{(m)} = F(M^{(m)} - L^{(m)})x^{(m)}$.

In Sd10, a fourth frequency-domain sequence is determined based on the third frequency-domain sequence and an index matrix of the reserved subcarriers in the first frequency-domain sequence; the fourth frequency-domain sequence including the modulation symbol on the reserved subcarriers selected from the third frequency-domain sequence.

The fourth frequency-domain sequence satisfies: $Y^{(m)}_b = B^T B Y^{(m)}$ .

In Sd11, a normalized sequence of the fourth frequency-domain sequence is determined.

The normalized sequence of the fourth frequency-domain sequence satisfies:

$$Z^{(m)} = \frac{b Y^{(m)}_b}{\left\| Y^{(m)}_b \right\|}.$$

In Sd12, a fifth frequency-domain sequence is determined based on the fourth frequency-domain sequence and the second frequency-domain sequence.

The fifth frequency-domain sequence satisfies: $X^{(m+1)} = Z^{(m)} + XC$.

In Sd13, whether the fifth frequency-domain sequence meets a convergence condition is determined.

For example, in the case where the fifth frequency-domain sequence does not meet the convergence condition, the fifth frequency-domain sequence is used as the first frequency-domain sequence, and then Sd3 is executed. In the case where the fifth frequency-domain sequence meets the convergence condition, Sd14 is executed.

In Sd14, the iteration is terminated, and the fifth frequency-domain sequence in which the PAPR is reduced is output.

The solutions of the embodiments of the present disclosure are described mainly from the perspective of method. It may be understood that, in order to realize the above functions, a signal processing apparatus includes at least one of corresponding hardware structure(s) and/or software module(s) for implementing the above functions. Those skilled persons in the art should easily realize that the embodiments of present disclosure may be implemented in the form of hardware(s) or a combination of hardware(s) and computer software(s) in combination with the units and algorithm steps described in the embodiments of the present disclosure. Whether a certain function is performed by a hardware or a computer software-driven hardware depends on the specific application and design constraints of the technical solutions. Professional technicians may use different methods to implement the described functions for each specific application, but such an implementation should not be considered beyond the scope of the present disclosure.

It may be understood that, in order to realize the above functions, the signal processing apparatus includes corresponding hardware structure(s) and/or software module(s) to implement the above functions. Those skilled in the art should easily recognize that the present disclosure can be implemented in the form of hardware(s) or a combination of hardware(s) and computer software(s), in conjunction with the algorithm steps of various examples described in the embodiments of the present disclosure. Whether a certain function is performed by a hardware or a computer software-driven hardware depends on the specific application and design constraints of the technical solutions. Professional technicians may use different methods to implement the described functions for each specific application, but such an implementation should not be considered beyond the scope of the present disclosure.

In the embodiments of the present disclosure, the communication apparatus is divided into functional module(s) according to the above method embodiment(s); for example, each function corresponds to a respective functional module, or two or more functions may be integrated into a single functional module. The above-mentioned integrated module may be implemented in the form of hardware or may be implemented in the form of software. It should be noted that the division of modules in the embodiments of the present disclosure is illustrative, and is merely a kind of logical functional division, and there may be other division methods in actual implementations. The example in which each functional module may be divided corresponding to each function is taken for explanation below.

FIG. 8 is a structural schematic diagram of a signal processing apparatus, in accordance with the embodiments of the present disclosure; the signal processing apparatus may perform the signal processing method provided in the above method embodiments. As shown in FIG. 8, the signal processing apparatus 600 includes: an acquisition module 601 and a processing module 602.

The acquisition module 601 is configured to acquire a first frequency-domain sequence, and the first frequency-domain sequence includes a modulation symbol corresponding to communication subcarriers and a modulation symbol corresponding to reserved subcarriers.

The processing module 602 is configured to obtain a fifth frequency-domain sequence by configuring the modulation symbol corresponding to the reserved subcarriers in the first frequency-domain sequence. A peak-to-average power ratio of the fifth frequency-domain sequence is less than a peak-to-average power ratio of the first frequency-domain sequence.

In some embodiments, the processing module 602 is configured to: set the modulation symbol corresponding to the reserved subcarriers in the first frequency-domain sequence to zero to obtain a second frequency-domain sequence; transform the first frequency-domain sequence to time domain to obtain a first time-domain sequence; determine a first power matrix and a second power matrix based on the first time-domain sequence, the first power matrix being a diagonal matrix, an element value on a diagonal of the first power matrix being a sum of a maximum value of power values of all time-domain symbols in the first time-domain sequence and a first preset offset, the first preset offset being a constant greater than zero; the second power matrix being a diagonal matrix, and element values on a diagonal of the second power matrix are power values of all the time-domain symbols in the first time-domain sequence; determine a third frequency-domain sequence based on the first time-domain sequence, the first power matrix, and the second power matrix; select the modulation symbol on the reserved subcarriers from the third frequency-domain sequence to obtain a fourth frequency-domain sequence; and obtain a fifth frequency-domain sequence based on the fourth frequency-domain sequence and the second frequency-domain sequence.

In some embodiments, the processing module 602 is further configured to: determine the power value of each time-domain symbol in the first time-domain sequence; obtain the first power matrix based on the identity matrix and the sum of the maximum value of the power values of all the time-domain symbols in the first time-domain sequence and the first preset offset; and diagonalize the power value of each time-domain symbol in the first time-domain sequence to obtain the second power matrix.

In some embodiments, the processing module 602 is further configured to determine the power corresponding to the first time-domain symbol based on square of a modulus of the first time-domain symbol; and determine the power corresponding to the second time-domain symbol based on square of a modulus of the second time-domain symbol and a second preset offset; the second preset offset being a constant greater than zero.

In some embodiments, the processing module 602 is further configured to: calculate a difference between the first power matrix and the second power matrix; and transform a product of the difference and the first time-domain sequence to frequency-domain to obtain a third frequency-domain sequence.

In some embodiments, the processing module 602 is configured to: determine a normalized sequence of the fourth frequency-domain sequence; and obtain the fifth frequency-domain sequence based on the normalized sequence of the fourth frequency-domain sequence and the second frequency-domain sequence.

In some embodiments, the processing module 602 is further configured to: normalize the fourth frequency-domain sequence and multiply a result of the normalization by a first power value to obtain the normalized sequence of the fourth frequency-domain sequence; the first power value being determined based on the square of the modulus of the modulation symbol corresponding to the reserved subcarriers in the first frequency-domain sequence.

In some embodiments, the processing module 602 is further configured to: add a value of an element at a position in the normalized sequence of the fourth frequency-domain sequence and a value of an element at corresponding position in the second frequency-domain sequence to obtain the fifth frequency-domain sequence.

In some embodiments, the processing module 602 is further configured to: determine whether the fifth frequency-domain sequence meets a convergence condition; and in response to that the fifth frequency-domain sequence does not meet the convergence condition, use the fifth frequency-domain sequence as the first frequency-domain sequence for iteration.

In some embodiments, the convergence condition includes at least one of the following: an actual number of iterations being greater than or equal to a preset maximum number of iterations; or a modulus of a difference between the fifth frequency-domain sequence obtained in the $(k+1)$-th iteration and the fifth frequency-domain sequence obtained in the $k$-th iteration being less than a preset threshold.

In some embodiments, the processing module 602 is further configured to determine the reserved subcarriers from subcarriers in the first frequency-domain sequence.

In some embodiments, the processing module 602 is further configured to: select the reserved subcarriers at equal intervals from the subcarriers in the first frequency-domain sequence; or select the reserved subcarriers consecutively from the subcarriers in the first frequency-domain sequence; or randomly select the reserved subcarriers from the subcarriers in the first frequency-domain sequence.

In a case where the functions of the above integrated modules are implemented in the form of hardware(s), the embodiments of the present disclosure provide a structure of a communication apparatus involved in the above embodiments. As shown in FIG. 9, the communication apparatus 800 includes: a processor 802, and a bus 804. In some embodiments, the communication apparatus may further include a memory 801. In some embodiments, the communication apparatus may further include a communication interface 803.

The processor 802 may implement or perform various exemplary logical blocks, modules and circuits described in conjunction with the embodiments of the present disclosure. The processor 802 may be a central processor, a general-purpose processor, a digital signal processor, a specific integrated circuit, a field programmable gate array, or any other programmable logic device, a transistor logic device, a hardware component, or any combination of the above. The processor 802 may implement or perform various exemplary logical blocks, modules and circuits described in combination with the embodiments of the present disclosure. Alternatively, the processor 802 may be a combination that implements computing functions, for example, including a combination of one or more microprocessors, or a combination of a digital signal processor (DSP) and a microprocessor.

The communication interface 803 is configured to connect with other devices via a communication network. The communication network may be Ethernet, a wireless access network, a wireless local area network (WLAN), or the like.

The memory 801 may be a read-only memory (ROM) or other types of static storage devices that can store static information and instructions, a random access memory (RAM), or other types of dynamic storage devices that can store information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

As a possible implementation, the memory 801 may exist independently from the processor 802, and the memory 801 may be connected to the processor 802 through the bus 804, and is configured to store instructions or program codes. The processor 802, when calling instructions or program codes stored in the memory 801 and performing the instructions or program codes, may implement the signal processing method provided in the embodiments of the present disclosure. In another implementation, the memory 801 may be integrated with the processor 802.

The bus 804 may be an extended industry standard architecture (EISA) bus, or the like. The bus 804 may be classified as an address bus, a data bus, and a control bus. For ease of representation, only one bold line is used to represent the bus 54 in FIG. 9, but it does not mean that there is only one bus or one type of bus.

Some embodiments of the present disclosure provide a computer-readable storage medium (e.g., a non-transitory computer-readable storage medium); the computer-readable storage medium has stored computer program instructions thereon, and the computer program instructions, when executed by a computer, enable the computer to perform the signal processing method as described in any one of the above embodiments.

For example, the above-mentioned computer-readable storage medium may include, but is not limited to: a magnetic storage device (e.g., a hard disk, a floppy disk, or a magnetic tape), an optical disk (e.g., a compact disk (CD), or a digital versatile disk (DVD)), a smart card, and a flash memory device (e.g., EPROM, a card, a stick, or a key drive). The various computer-readable storage media described in the present disclosure may represent one or more devices and/or other machine-readable storage media that is used for storing information. The term "machine-readable storage medium" includes, but is not limited to, a wireless channel, and various other media capable of storing, containing, and/or carrying instructions and/or data.

Some embodiments of the present disclosure provide a computer program product including instructions; when the computer program product is run on a computer, the computer is enabled to perform the signal processing method as described in any one of the above-mentioned embodiments.

The aforementioned descriptions are merely specific implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be based on the protection scope of claims.

**Claims**

1. A signal processing method, comprising:

   acquiring a first frequency-domain sequence, the first frequency-domain sequence comprising a modulation symbol corresponding to communication subcarriers and a modulation symbol corresponding to reserved subcarriers; and

   obtaining a fifth frequency-domain sequence by configuring the modulation symbol corresponding to the reserved subcarriers in the first frequency-domain sequence, a peak-to-average power ratio of the fifth frequency-domain sequence being less than a peak-to-average power ratio of the first frequency-domain sequence.

2. The method according to claim 1, wherein obtaining the fifth frequency-domain sequence by configuring the modulation symbol corresponding to the reserved subcarriers in the first frequency-domain sequence, comprises:

   setting the modulation symbol corresponding to the reserved subcarriers in the first frequency-domain sequence to zero to obtain a second frequency-domain sequence;

   transforming the first frequency-domain sequence to time domain to obtain a first time-domain sequence;

   determining a first power matrix and a second power matrix based on the first time-domain sequence; wherein the first power matrix is a diagonal matrix, and an element value on a diagonal of the first power matrix is a sum of a maximum value of power values of all time-domain symbols in the first time-domain sequence and a first preset offset; the first preset offset is a constant greater than zero; the second power matrix is a diagonal matrix, and element values on a diagonal of the second power matrix are the power values of all the time-domain symbols in the first time-domain sequence;

   determining a third frequency-domain sequence based on the first time-domain sequence, the first power matrix, and the second power matrix;

   obtaining a fourth frequency-domain sequence by selecting the modulation symbol on the reserved subcarriers from the third frequency-domain sequence; and

   obtaining a fifth frequency-domain sequence based on the fourth frequency-domain sequence and the second frequency-domain sequence.

3. The method according to claim 2, wherein determining the first power matrix and the second power matrix based on the first time-domain sequence, comprises:

   determining a power value of each time-domain symbol in the first time-domain sequence;

   obtaining the first power matrix based on an identity matrix and a sum of a maximum value of power values of all time-domain symbols in the first time-domain sequence and a first preset offset; and
diagonalizing the power values of all the time-domain symbols in the first time-domain sequence to obtain the second power matrix.

4. The method according to claim 3, wherein in response to that the first time-domain sequence includes a first time-domain symbol and a second time-domain symbol, determining a power sequence corresponding to the first time-domain sequence, comprises:

determining a power corresponding to the first time-domain symbol based on square of a modulus of the first time-domain symbol; and
determining a power corresponding to the second time-domain symbol based on a second preset offset and a square of a modulus of the second time-domain symbol; the second preset offset being a constant greater than zero.

5. The method according to claim 2, wherein determining the third frequency-domain sequence based on the first time-domain sequence, the first power matrix, and the second power matrix, comprises:

calculating a difference between the first power matrix and the second power matrix; and
transforming a product of the difference and the first time-domain sequence to frequency-domain to obtain the third frequency-domain sequence.

6. The method according to claim 2, wherein determining the fifth frequency-domain sequence based on the fourth frequency-domain sequence and the second frequency-domain sequence, comprises:

determining a normalized sequence of the fourth frequency-domain sequence; and
obtaining the fifth frequency-domain sequence based on the normalized sequence of the fourth frequency-domain sequence and the second frequency-domain sequence.

7. The method according to claim 6, wherein determining the normalized sequence of the fourth frequency-domain sequence, comprises:
normalizing the fourth frequency-domain sequence, and multiplying a result of normalization by a first power value to obtain the normalized sequence of the fourth frequency-domain sequence; wherein the first power value is determined based on a square of a modulus of the modulation symbol corresponding to the reserved subcarriers in the first frequency-domain sequence.

8. The method according to claim 6, wherein obtaining the fifth frequency-domain sequence based on the normalized sequence of the fourth frequency-domain sequence and the second frequency-domain sequence, comprises:
adding a value of an element at a position in the normalized sequence of the fourth frequency-domain sequence and a value of an element at corresponding position in the second frequency-domain sequence to obtain the fifth frequency-domain sequence.

9. The method according to claim 1, further comprising:

determining whether the fifth frequency-domain sequence meets a convergence condition; and
in response to that the fifth frequency-domain sequence does not meet the convergence condition, using the fifth frequency-domain sequence as the first frequency-domain sequence for iteration.

10. The method according to claim 9, wherein the convergence condition comprises at least one of:

an actual number of iterations being greater than or equal to a preset maximum number of iterations; or
a modulus of a difference between a fifth frequency-domain sequence obtained in a (k+1)-th iteration and a fifth frequency-domain sequence obtained in a k-th iteration being less than a preset threshold.

11. The method according to claim 1, further comprising:
determining the reserved subcarriers from subcarriers in the first frequency-domain sequence.

12. The method according to claim 11, wherein determining the reserved subcarriers from the subcarriers in the first frequency-domain sequence, comprises:

selecting the reserved subcarriers at equal intervals from the subcarriers in the first frequency-domain sequence; or

selecting the reserved subcarriers consecutively from the subcarriers in the first frequency-domain sequence; or

selecting the reserved subcarrier randomly from the subcarriers in the first frequency domain sequence.

13. A communication apparatus, comprising: a memory and a processor, the memory being coupled to the processor, wherein the memory is configured to store instructions executable by the processor; when executing the instructions, the processor performs the signal processing method according to any one of claims 1 to 12.

14. A computer-readable storage medium, wherein the computer-readable storage medium stores computer instructions, and the computer instructions, when executed on an electronic device, cause the electronic device to perform the signal processing method according to any one of claims 1 to 12.

Transmitter 110

Sensing target

Communication receiver 120

Communication processing device

Sensing receiver 130

Communication processing device

FIG. 1

Acquire a first frequency domain sequence, the first frequency domain sequence comprising a modulation symbol corresponding to a communication subcarrier and a modulation symbol corresponding to a reserved subcarrier — S201

Obtain a fifth frequency domain sequence by means of configuring the modulation symbol corresponding to the reserved subcarrier of the first frequency domain sequence, the peak-to-average ratio of the fifth frequency domain sequence being lower than the peak-to-average ratio of the first frequency domain sequence — S202

FIG. 2

FIG. 3

Acquire a first frequency-domain sequence, the first frequency-domain sequence including a modulation symbol corresponding to communication subcarriers and a modulation symbol corresponding to reserved subcarriers — S201

Set the modulation symbol corresponding to the reserved subcarriers in the first frequency-domain sequence to zero to obtain a second frequency-domain sequence — S2021

Transform the first frequency-domain sequence to time domain to obtain a first time-domain sequence — S2022

Determine a first power matrix and a second power matrix based on the first time-domain sequence — S2023

— S202

Determine a third frequency-domain sequence based on the first time-domain sequence, the first power matrix, and the second power matrix — S2024

Obtain a fourth frequency-domain sequence by selecting the modulation symbol on the reserved subcarriers from the third frequency-domain sequence — S2025

Obtain a fifth frequency-domain sequence based on the fourth frequency-domain sequence and the second frequency-domain sequence — S2026

FIG. 4

Acquire a first frequency-domain sequence, the first frequency-domain sequence including a modulation symbol corresponding to communication subcarriers and a modulation symbol corresponding to reserved subcarriers — S201

Obtain a fifth frequency-domain sequence by configuring the modulation symbol corresponding to the reserved subcarriers in the first frequency-domain sequence, a peak-to-average power ratio of the fifth frequency-domain sequence being less than a peak-to-average power ratio of the first frequency-domain sequence — S202

Determine whether the fifth frequency-domain sequence meets a convergence condition — S203

In response to that the fifth frequency-domain sequence does not meet the convergence condition, use the fifth frequency-domain sequence as the first frequency-domain sequence for iteration — S204

FIG. 5

Determine an initial value $X^{(0)}$ of a first frequency-domain sequence, and set a modulation symbol on reserved subcarriers in $X^{(0)}$ to 0, to obtain a second frequency-domain sequence XC — Sc1

Allocate power to modulation symbols of communication subcarriers and the reserved subcarriers in the first frequency-domain sequence — Sc2

Transform the first frequency-domain sequence $X^{(m)}$ to time domain to obtain the first time-domain sequence $x^{(m)}$ — Sc3

Determine a power sequence $p^{(m)}=|x^{(m)}|^2$ corresponding to the first time-domain sequence — Sc4

Add a maximum value in the power sequence to a preset offset to obtain a target power value — Sc5

Multiply the target power value by an identity matrix to obtain a first power matrix — Sc6

Diagonalize the power sequence to obtain a second power matrix — Sc7

Determine a third frequency-domain sequence based on the first time-domain sequence, the first power matrix, and the second power matrix — Sc8

Determine a fourth frequency-domain sequence based on the third frequency-domain sequence and an index matrix of the reserved subcarriers in the first frequency-domain sequence — Sc9

Determine a normalized sequence of the fourth frequency-domain sequence — Sc10

Determine a fifth frequency-domain sequence based on the fourth frequency-domain sequence and the second frequency-domain sequence — Sc11

Use the fifth frequency-domain sequence as the first frequency-domain sequence

No ← Determine whether the fifth frequency-domain sequence meets a convergence condition — Sc12

Yes ↓

Terminate iteration, and output the fifth frequency-domain sequence in which the PAPR is reduced — Sc13

FIG. 6

FIG. 7

FIG. 8

FIG. 9

## INTERNATIONAL SEARCH REPORT

| International application No. |
| --- |
| **PCT/CN2024/100414** |

### A. CLASSIFICATION OF SUBJECT MATTER

H04L27/26(2006.01)i; H04L27/34(2006.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, ENTXTC, ENTXT, WEB OF SCIENCE: 功率, 峰均比, 峰值平均功率, 符号, 傅里叶, 傅立叶, 矩阵, 预留, 子载波, IFFT, FFT, PAPR, peak, ratio, average power, fourier, tone reservation, sub, carrier, frequency, domain, time, array, matrix

### C. DOCUMENTS CONSIDERED TO BE RELEVANT

| Category* | Citation of document, with indication, where appropriate, of the relevant passages | Relevant to claim No. |
| --- | --- | --- |
| X | CN 101035105 A (XIDIAN UNIVERSITY) 12 September 2007 (2007-09-12) description, pages 7-8 | 1-14 |
| X | EP 2056553 A1 (PANASONIC CORP.) 06 May 2009 (2009-05-06) description, pages 5-6 | 1-14 |
| A | WO 2014091198 A1 (SONY CORP. et al.) 19 June 2014 (2014-06-19) entire document | 1-14 |
| A | US 2013107982 A1 (NISHIKAWA NOBUYOSHI et al.) 02 May 2013 (2013-05-02) entire document | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 August 2024** | **29 August 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/100414**

| Patent document cited in search report | | | Publication date (day/month/year) | Patent family member(s) | | | Publication date (day/month/year) |
|---|---|---|---|---|---|---|---|
| CN | 101035105 | A | 12 September 2007 | CN | 101035105 | B | 03 November 2010 |
| EP | 2056553 | A1 | 06 May 2009 | None | | | |
| WO | 2014091198 | A1 | 19 June 2014 | GB | 201222552 | D0 | 30 January 2013 |
| | | | | GB | 201307835 | D0 | 12 June 2013 |
| | | | | GB | 2508942 | A | 18 June 2014 |
| US | 2013107982 | A1 | 02 May 2013 | JP | 2013093746 | A | 16 May 2013 |
| | | | | JP | 5782989 | B2 | 24 September 2015 |
| | | | | US | 8767852 | B2 | 01 July 2014 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311287412